# EUROPEAN PATENT SPECIFICATION

(11) **EP 0 640 050 B1**
(45) Date of publication and mention of the grant of the patent: **10.04.1996**
(21) Application number: 93911938.4
(22) Date of filing: 11.05.1993
(51) Int. Cl.: B62K 27/12

(54) **IMPROVEMENTS IN OR RELATING TO DRAWBARS FOR CYCLE TRAILERS**
VERBESSERUNGEN AN DEICHSELN FÜR FAHRRADHÄNGER
PERFECTIONNEMENTS APPORTES AUX BARRES DE TRACTION D'UNE REMORQUE TIREE PAR UNE BICYCLETTE

(30) Priority: 12.05.1992 GB 9210193
(43) Date of publication of application: 01.03.1995
(73) Proprietor: MIKLINK INTERNATIONAL LIMITED, Beaminster, Dorset DT8 3AN (GB)
(72) Inventor: POOLE, Harold, George 13 Rax Lane, Dorset DT6 3JN (GB)
(74) Representative: Bayliss, Geoffrey Cyril
(86) International application number: GB9300966
(87) International publication number: WO9323285

(56) References cited:
- CA-A- 1 169 892
- FR-A- 834 947
- FR-A- 886 390
- US-A- 3 999 777

## Description

This invention relates to drawbars for cycle trailers and is particularly applicable to cycle trailers although it is also suitable for trailers to be drawn by motorised cycles, mopeds, scooters and the like. The trailer may be of any form suitable to be drawn by a cycle and having a drawbar which is attached to and, in normal use, will apply some downward loading on the cycle. Typically the trailer will be a two-wheeled trailer although single wheeled trailers are contemplated.

Cycles are conventionally used for personal transport but they may also be used for carrying or moving loads and a variety of cycle trailers have been developed for this purpose. Such trailers have usually attached to the cycle frame immediately below the saddle or to one or other of the rear forks of the frame at the location where the rear wheel spindle is secured in the forks. Because of the way in which these arrangements impose the load of the trailer on the cycle, they can make the cycle difficult to handle and manoeuvre and may also restrict the turning circle of the cycle/trailer combination.

FR-A-834947 discloses a drawbar for a cycle trailer providing three independent axes of articulation by means of a first pivotal joint about a horizontal axis attached partway up the seat stays the cycle frame, a second pivotal joint about a vertical axis behind the rear wheel of the cycle and a third pivotal joint extending generally lengthwise of the drawbar. The attachment of the first pivotal joint to the cycle frame above the rear wheel axis results in a relationship which is dynamically unstable in that the drag force imposed by the trailer drawbar on the cycle when the cycle trailer combination is in forward motion tends to tip the front of the cycle upwards.

This invention provides a draw bar for a cycle trailer comprising an elongate member for extending between a cycle and cycle trailer, an attachment device at one end of the member for securing the member to the cycle frame adjacent the rear wheel axis with a first pivotal joint between the attachment device and said one end of the member for relative rotation between the member and attachment device about a horizontal axis extending transversely of the member, a second attachment device at the other end of the member for securing the member to the cycle trailer, a second pivotal joint at or adjacent the other end of the member for articulation about a vertical axis to lie to the rear of the cycle in use and a third pivotal joint having a horizontal axis to extend lengthwise of the member, whereby the cycle can turn with respect to the trailer about the second pivotal joint, heel with respect to the trailer about the third pivotal joint and can tip in a vertical plane about the first pivotal joint; wherein the attachment device for securing said one end of the member to the cycle frame has a first portion for attachment along a length of the chain stay of the cycle frame and a second portion for attachment to the seat stay of the cycle frame to support said pivotal joint for the forward end of the elongate member below the chain stay so that, in use, its axis lies forward and below the rear wheel axis of the cycle to avoid the trailer imposing a moment on the cycle which tends to lift the front of the cycle in the static condition and minimising any tipping moment tending to lift the front of the cycle arising from the rolling resistance of the trailer in the dynamic condition.

In a preferred construction according to the invention the attachment device for connecting said one end of the elongate member to the chain and seat stays comprises a bracket, means for securing the bracket to the chain stay and means for securing the bracket to the seat stay, said first pivot connection is provided between said one end of the elongate member and the bracket.

It is an object of the present invention to provide a drawbar for a cycle trailer in which the loads imposed on the cycle by the trailer enhance rather than diminish the stability of the cycle.

The following is a description of some specific embodiments of the invention, reference being made to the accompanying drawings in which
Figure 1 is a diagramatic view of a cycle/trailer combination embodying a drawbar in accordance with the invention; and
Figure 2 is a plan view of the drawbar arrangement for the trailer, and
Figure 3 is a perspective modified attachment for the cycle frame;
Figure 4 is a further perspective view of the modified attachment of Figure 3; and
Figures 5 to 7 and 8 to 18 show further embodiments of the invention.

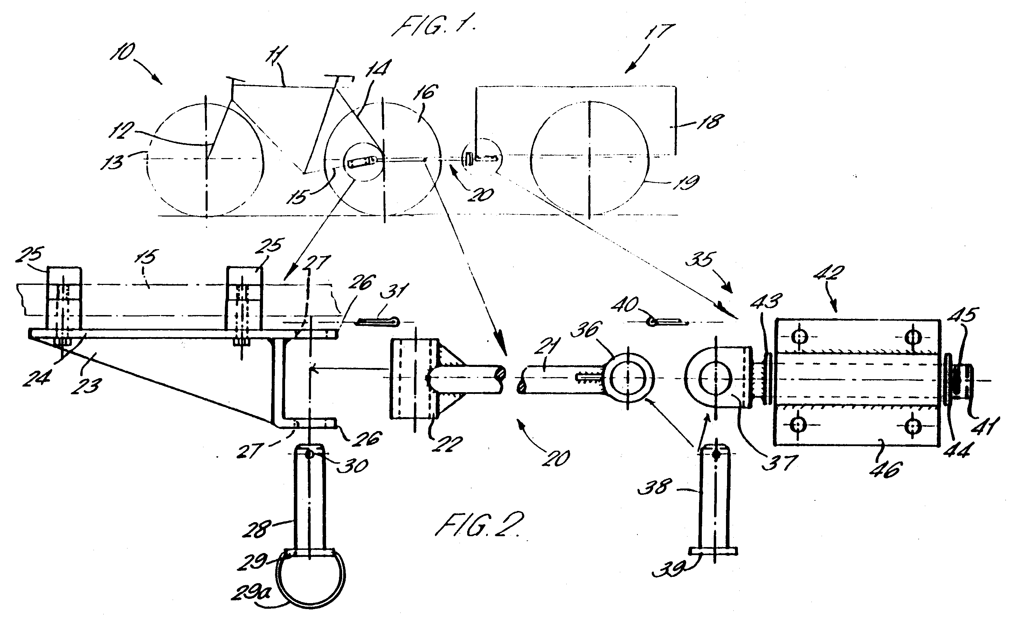

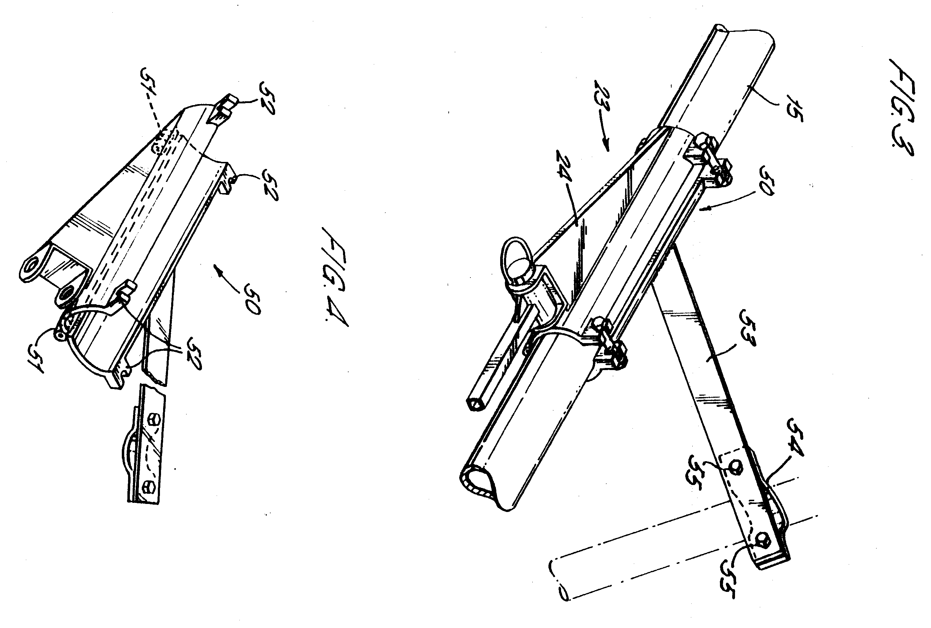

Referring firstly to Figure 1 of the drawings there is shown a cycle indicated generally at 10 having a frame 11 including pivotally mounted front forks 12 supporting a front wheel 13 and upper and lower rear forks 14, 15 supporting a rear wheel 16. A trailer for the cycle is indicated at 17 comprising an open box carrier 18 supported by wheels 19 mounted on an axle (not shown). The trailer has a drawbar indicated generally at 20 coupling the trailer to the cycle frame. The drawbar will now be described in detail with respect to Figure 2 of the drawings.

The drawbar 20 comprises an elongate rigid rod 21 of hollow or solid cylindrical, square or equivalent cross-section. The rod has a hollow cylindrical hub 22 secured by welding to its forward end with the axis of the hub extending horizontally, transverse to the drawbar. Alternatively the rod and hub could be formed of a single casting. A bracket 23 has a base plate 24 to which a pair of spaced clamps 25 are secured to receive and attach to one of the lower rear forks 25 of the cycle in front of the rear wheel axis. The bracket 23 is formed with a horizontally spaced pair of lugs 26 formed with apertures 27 to receive a pivot pin 28 having a head 29 at one end and a bore 30 at the other end to receive a split pin 31 or clevis pin to lock the pin in the lugs. The head 29 of pin 28 is provided with a handle 29a in the form of an integral loop to facilitate extraction of the pin. The hub 22 at the forward end of the drawbar locates between the lugs 26 with the pin 28 extending through the hub to allow the drawbar to pivot about a horizontal axis extending transversely to the fore and aft direction of the drawbar to allow the cycle and trailer to tip with respect to each other in a vertical plane.

The drawbar 20 immediately in front of the trailer and to the rear of the rearward most extremity of the cycle is formed with a pivotal coupling for turning movement about a vertical axis indicated generally at 35. The coupling comprises a vertically extending hollow cylindrical hub 36 secured by welding to the drawbar. The hub engages between the arms of a clevis 37 and is secured thereto by a clevis pin 38. The clevis pin has a head 39 at one end and is secured in the clevis by means of a split pin 40. The arrangement provides for turning of the cycle with respect to the trailer about a vertical axis for steering purposes.

The clevis 37 is mounted at the end of a spindle 41 forming an end part of the drawbar which engages in a hub 42 secured to the underside of the forward end of the body 18 of the trailer to rotate about the axis of the drawbar for leaning/rocking of the cycle with respect to the trailer. The forward end of the spindle 41 has a head 43 engageable with the forward side of the hub and the rearward end of the spindle carries a washer 44 and a split pin 45 which locks the spindle in the hub. The hub 42 is formed with outwardly extending flanges 46 secured to the underside of the trailer body by bolts (not shown). The location of mounting of the bearing on the trailer will, of course, be determined by the form and construction of the trailer and, where appropriate, could be secured to a forward extension on the trailer or the upperside of a flange on the trailer.

By arranging for the drawbar to be rigid in the vertical plane with the horizontal pivot axis to allow relative tipping of the cycle and trailer between the forward end of the drawbar and the bracket securing the drawbar to the cycle frame, downward load on the cycle resulting from the loaded trailer is imposed on the cycle between the front and rear wheel axes and so acts in the static condition in a direction to hold both wheels of the cycle on the ground and not to apply any moment which would tip the front wheel of the cycle upwardly off the ground. The coupling 35 at the rearward end of the drawbar permits articulation of the drawbar with respect to the trailer about an axis well to the rear of the rearmost extremity of the cycle so that the angle at which the cycle can turn with respect to the trailer is not restricted by the cycle to allow maximum manoeuverability. The coupling of the drawbar to the lower frame fork of the cycle ensures that the load is applied to the frame low down on the cycle so that the force applied by the trailer to the cycle in the dynamic condition arising from the rolling resistance of the trailer and tending to tip the cycle up is minimized.

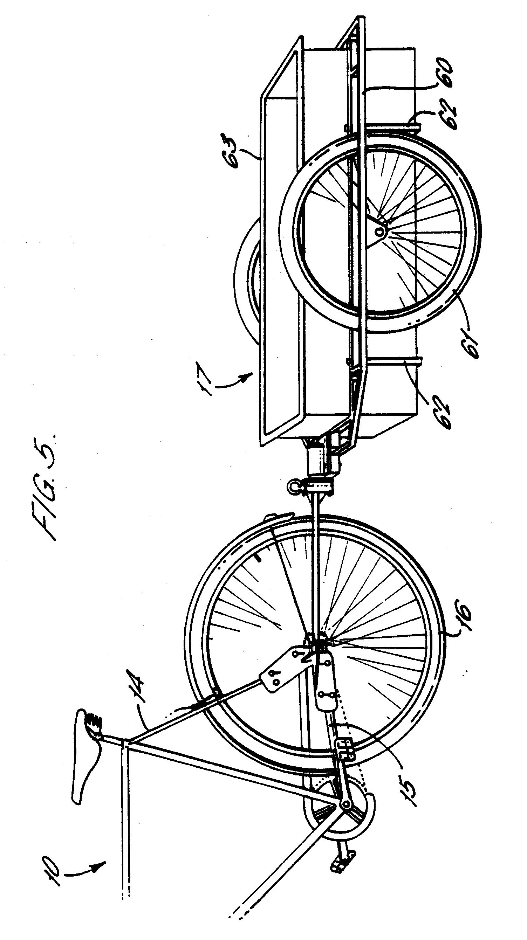

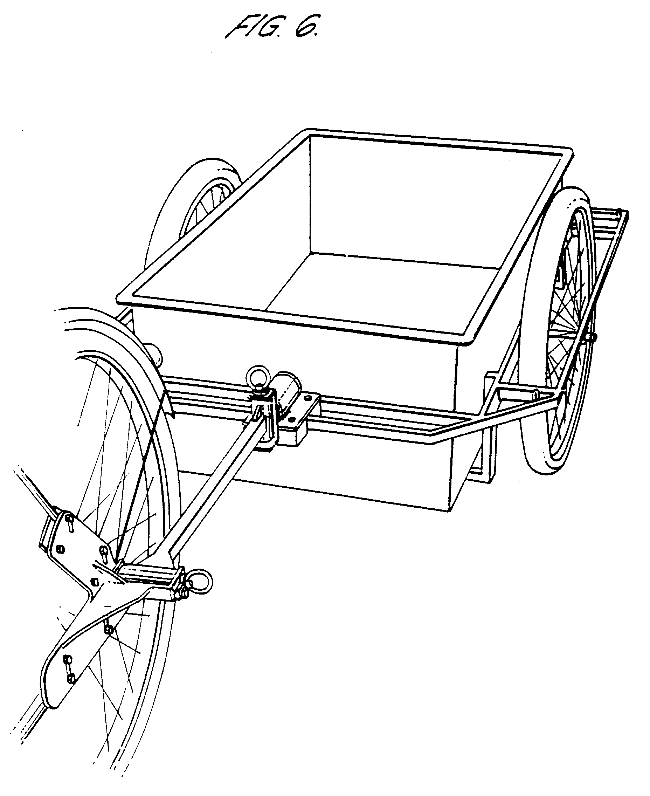

Figures 3 and 4 of the drawings illustrate a modified form of the bracket 23 to which is fitted to a lower rear fork member of the cycle frame. The triangular base plate 24 of the bracket has an elongate tubular clamp 50 secured to or formed integrally with one edge of the plate. The clamp is formed in two shell-like portions connected together by hinges 51 to open for fitting/removal from the frame member with upstanding legs 52 to receive bolts 53 for holding the bracket portions together clamped to the frame member. The arrangement is otherwise similar to that described above. The bracket 23 with its clamp 50 may be formed in metal or could be moulded as a one piece component in a hard plastics material. The clamp 50 is connected by a brace 53 to the adjacent inclined rear fork of the cycle frame. The brace is attached to the frame by a simple strap 54 extending over the frame member and secured to the brace by bolts 55.

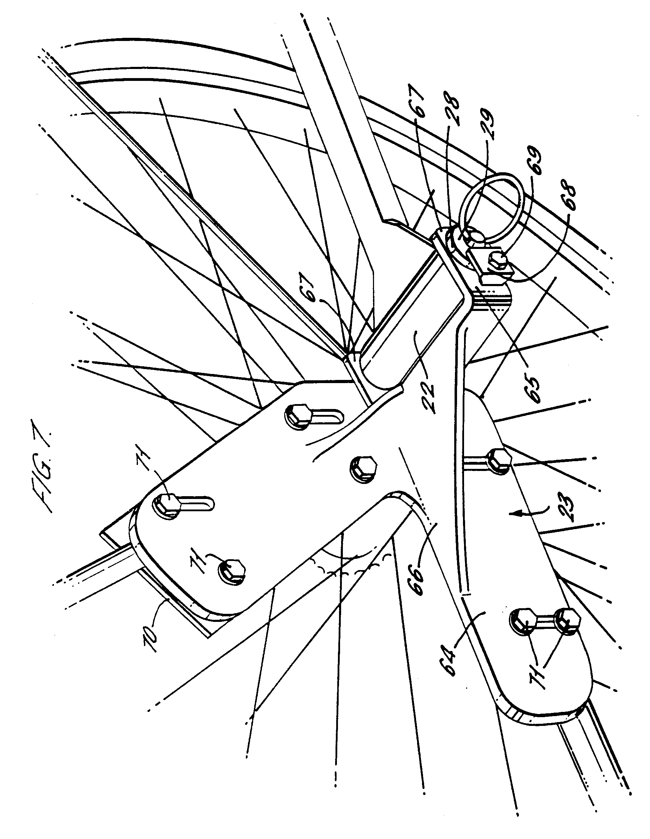

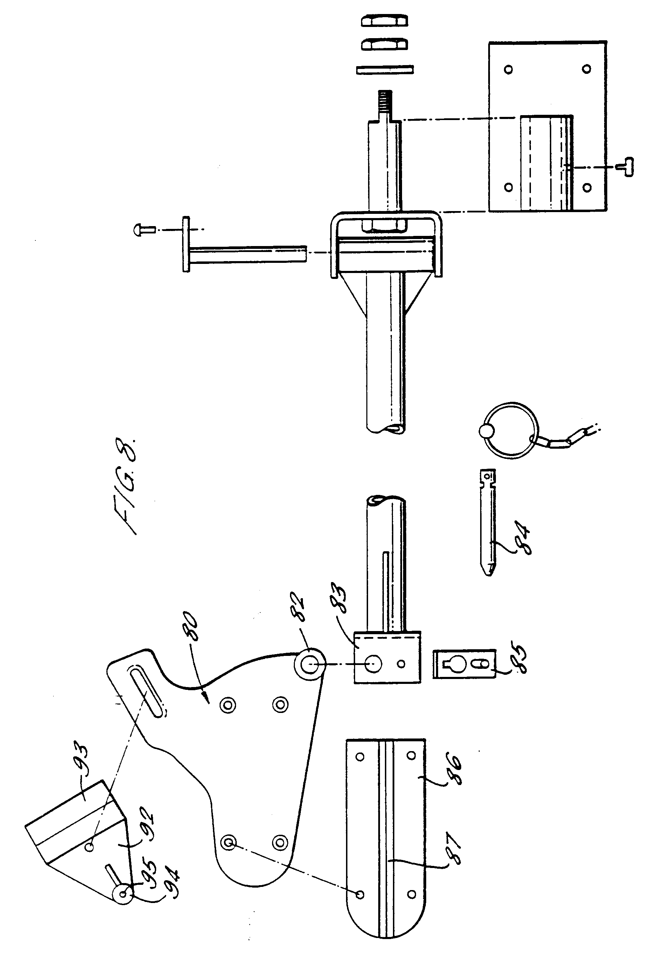

Reference is now made to Figures 5 to 7 of the drawings which show a further form of trailer and drawbar coupled to the rear part of the cycle frame. The components and features of the drawbar itself are generally similar to those of the drawbar described above and like parts have been allotted the same reference numerals.

The trailer illustrated comprises a generally rectangular frame 60 supported on cycle type wheels 61. The frame has U-shaped cross-members 62 which support a box-form skip 63 in the frame to carry a payload.

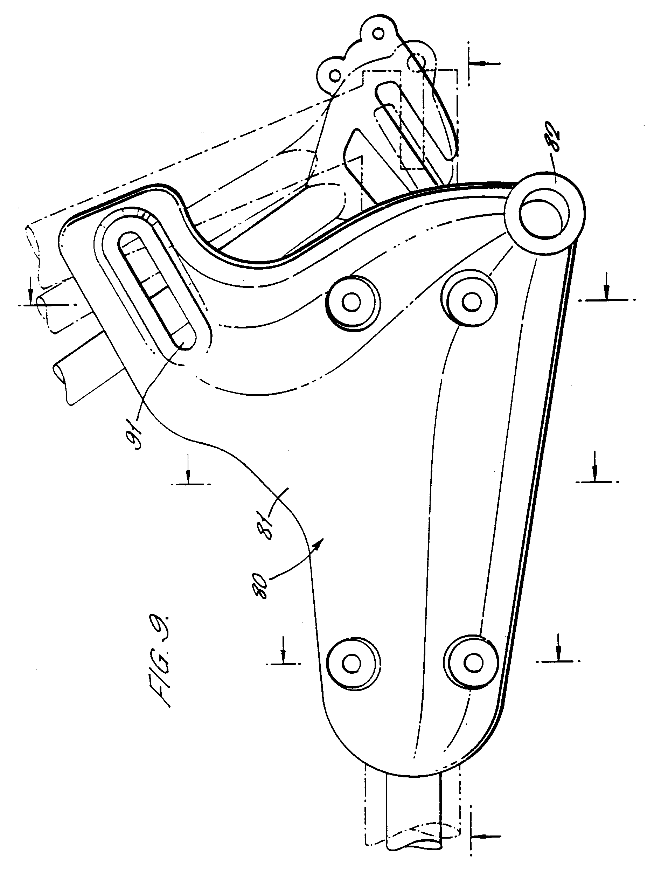

The arrangement of the drawbar is generally similar to that described above but the mounting for the forward end of the drawbar to the cycle frame is different and will now be described with reference to Figure 7. The bracket 23 comprises a V-shaped metal fabrication 64 which engages against the rearward part of the chain stay and lower part of the seat stay of the bicycle frame. The bracket further includes a U-shaped socket 65 which faces rearwardly of the bracket and is braced by a forwardly extending triangular web 66. The socket 65 provides laterally spaced lugs 67 dimensioned to receive between them the forward hub 22 of the trailer drawbar and formed with holes to receive the pin 28 to secure the hub for rotation in the socket about a horizontal axis extending transversely of the bicycle. The head 29 of the pin is retained in the socket by means of a clamp 68 secured to the outer lug of the socket by a bolt 69.

The arms of the V of the bracket engage the outer sides of the chain and seat stays and are clamped thereto by backing plates 70 which engage on the inner sides of the chain and seat stays and bolts 71 extending through holes or slots in the bracket and engaging in screw-threaded holes in the backing plates. Slots in the bracket for the bolts permit the bracket to be "tailored" to the angle between the seat and chain stays.

The socket on the bracket for the end of the drawbar is aligned so that, when the bracket is assembled on the bicycle, the horizontal axis defined by the socket about which the forward end of the drawbar pivots is generally parallel to the rear wheel axis of the bicycle.

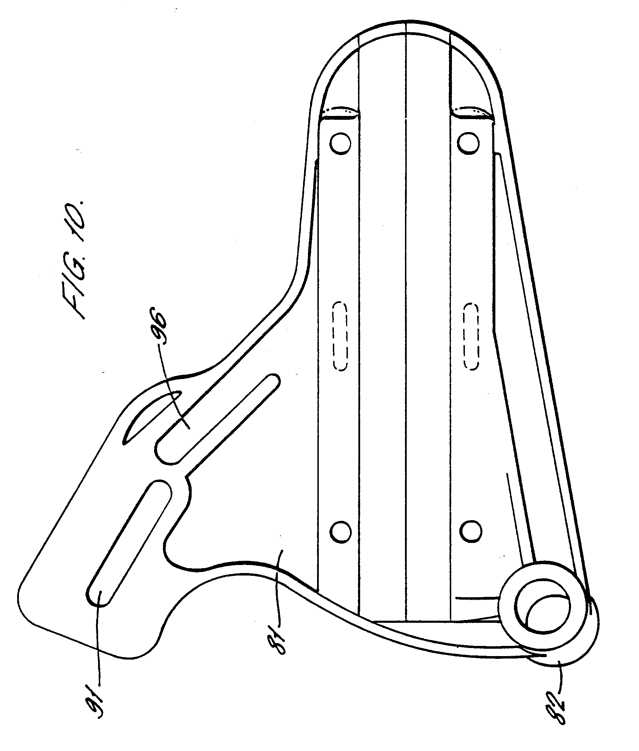

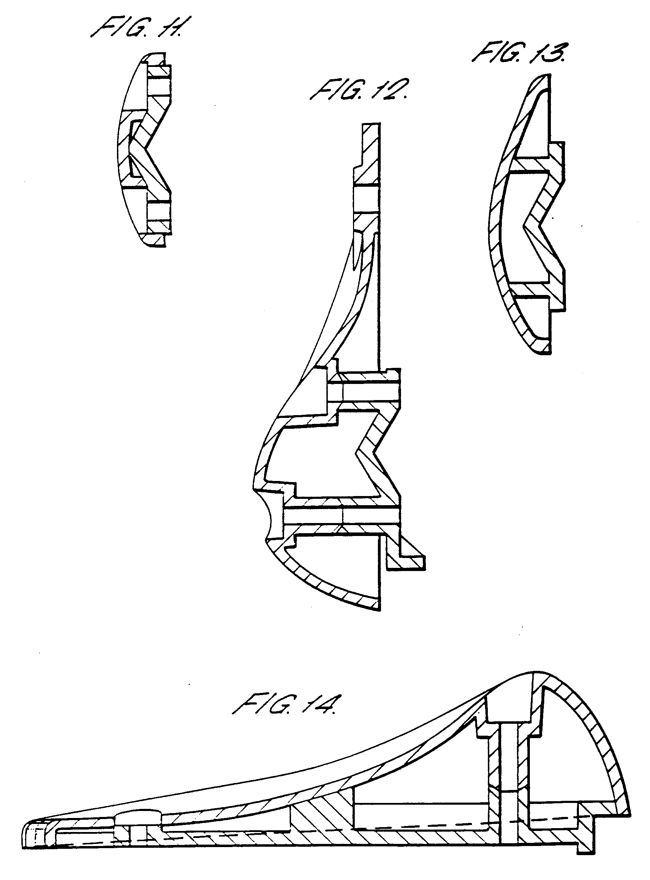

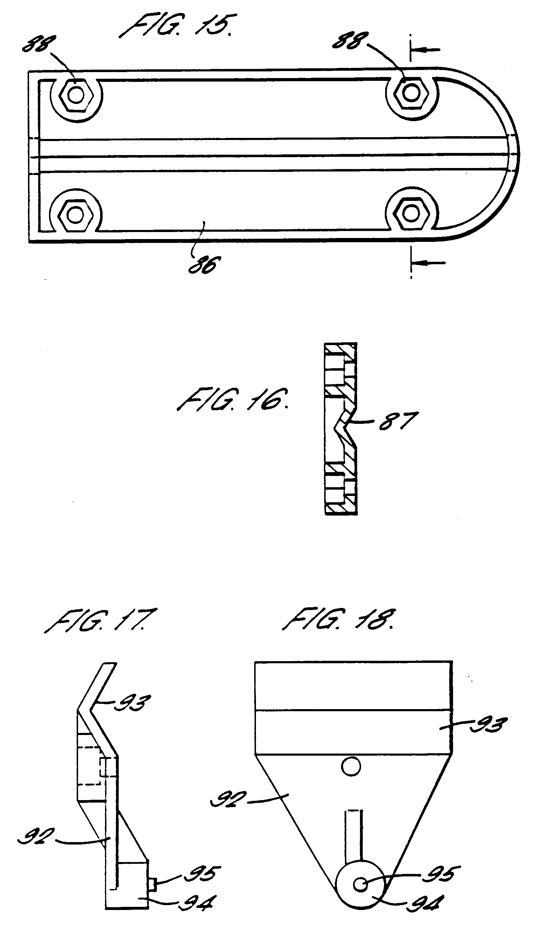

Yet a further embodiment of the invention is shown in Figures 8 to 15 to which reference will now be made and again, like parts have been allotted the same reference numerals. Again, the trailer and drawbar are generally similar to the arrangements previously described as will be apparent from the general arrangement of Figure 8. As before, the main differences lie in the form of the bracket secured to the cycle frame and in this case the bracket comprises an outer aluminium casting 80 which is illustrated in Figures 9 to 14 to which reference will now be made.

The casting comprises a main body part 81 on the rearward part of the chain stay on one side of the cycle and the lower part of the corresponding seat stay. The body part includes a cylindrical hub 82 formed at the lower rear corner of the casting and extending generally transversely of the casting to which a general section socket mounted at the forward end of the trailer drawbar is mounted by means of a transverse pin 84. The pin is held in the socket by means of a locking plate 85 mounted on one end of the socket.

The casting is secured to the chain stay of the cycle frame by a backing plate 86 having a V-shaped recess 87 (see Figure 16) to receive the innner side of the frame and bolts 88. As best seen in Figure 9 of the drawings, the casting 81 is formed with a slot 91 opposite the location of the seat stay of the cycle frame and again a backing plate 92 shown in Figures 17 and 18 is provided with a V-shaped recess 93 to receive the frame and a single bolt (not shown). The backing plate 92 is also formed with an upstanding boss 94 having an integral projecting pin 95 to locate in an elongate socket 96 on the rearward side of the cast to cater for differently angled chain stays as indicated in Figure 9. A further difference in the arrangement is the provision of a handle (not shown) at the forward end of the trailer drawbar for using the trailer as a hand-cart or manoeuvring the trailer prior to connection to the cycle.

## Claims

1. A draw bar (20) for a cycle trailer comprising an elongate member (21) for extending between a cycle and cycle trailer, an attachment device (23) at one end of the member for securing the member to the cycle frame adjacent the rear wheel axis with a first pivotal joint (22, 27, 28; 82-85) between the attachment device and said one end of the member for relative rotation between the member and attachment device about a horizontal axis extending transversely of the member, a second attachment device (35) at the other end of the member for securing the member to the cycle trailer, a second pivotal joint (36, 37, 38) at or adjacent the other end of the member for articulation about a vertical axis to lie to the rear of the cycle in use and a third pivotal joint (41, 42) having a horizontal axis to extend lengthwise of the member, whereby the cycle can turn with respect to the trailer about the second pivotal joint, heel with respect to the trailer about the third pivotal joint and can tip in a vertical plane about the first pivotal joint; characterised in that the attachment device for securing said one end of the member to the cycle frame has a first portion (24, 64; 86) for attachment along a length of the chain stay of the cycle frame and a second portion (53; 92) for attachment to the seat stay of the cycle frame to support said pivotal joint (22, 27, 28; 82-85) for the forward end of the elongate member below the chain stay so that, in use, its axis lies forward and below the rear wheel axis of the cycle to avoid the trailer imposing a moment on the cycle which tends to lift the front of the cycle in the static condition and minimising any tipping moment tending to lift the front of the cycle arising from the rolling resistance of the trailer in the dynamic condition.

2. A drawbar as claimed in claim 1, characterised in that the attachment device for connecting said one end of the elongate member to the chain and seat stays comprises a bracket (23), means (25, 50, 86) for securing the bracket to the chain stay and means (54, 20, 92) for securing the bracket to the seat stay and in that said first pivot connection is provided between said one end of the elongate member and the bracket.

3. A drawbar as claimed in claim 2, characterised in that the first pivotal connection comprises a pair of horizontal spaced lugs (26, 67) on the bracket, a hub (22) at said one end of the elongate member having a bore extending transversely to the member and a pivot pin (28) securing the hub between the lugs of the bracket.

4. A drawbar as claimed in claim 2 or claim 3, characterised in that the means for securing the bracket to the seat and chain stays of the cycle frame comprise a pair of spaced clamping members (25) secured to the bracket.

5. A drawbar as claimed in any of the preceding claims, characterised in that the attachment device (35) securing the other end of the elongate member to the trailer comprises a hub (36) having means (42) for securing the hub to a trailer in which an end part of the elongate member is received and secured for rotation about the lengthwise axis of the member to provide said third pivotal connection.

6. A drawbar as claimed in any of the preceding claims, characterised in that the second pivotal connection comprises a clevis and pin connection (37, 38) adjacent said other end of the elongate member.

7. A drawbar as claimed in claim 6, characterised in that the clevis/pin connection comprises a clevis formed on one part of the elongate member and a hub formed on another part of the member having an axis extending transversely to the member to locate between the arms of the clevis and a pivot pin to secure the hub between the arms of the clevis and to provide articulation about said vertical axis.

## Patentansprüche

1. Deichsel (20) für einen Zweiradanhänger, umfassend: ein langgestrecktes Element (21) zum Verlauf zwischen einem Zweirad und dem Zweiradanhänger, eine Befestigungsvorrichtung (23) an einem Ende des Elements, zum Sichern des Elements an dem Zweiradrahmen nahe der Hinterradachse, mit einem ersten Schwenkgelenk (22, 27, 28; 82-85) zwischen der Befestigungsvorrichtung und dem anderen Ende des Elements zur Relativdrehung zwischen dem Element und der Befestigungsvorrichtung um eine quer zu dem Element verlaufende Horizontalachse, eine zweite Befestigungsvorrichtung (35) am anderen Ende des Elements zum Sichern des Elements an dem Zweiradanhänger, ein bei Verwendung hinter dem Zweirad liegendes zweites Schwenkgelenk (36, 37, 38) an oder nahe dem anderen Ende des Elements zur Anlenkung um eine Vertikalachse, und ein drittes Schwenkgelenk (41, 42) mit einer Horizontalachse zum Verlauf in Längsrichtung des Elements, wodurch das Zweirad relativ zu dem Anhänger um das zweite Schwenkgelenk schwenken kann, relative zu dem Anhänger um das dritte Schwenkgelenk kippen kann und in einer Vertikalebene um das erste Schwenkgelenk nicken kann;
**dadurch gekennzeichnet**,
daß die Befestigungsvorrichtung zum Sichern des einen Endes des Elements an dem Zweiradrahmen einen ersten Abschnitt (24, 64; 86) zum Anbringen längs einer Länge der Kettenstange des Zweiradrahmens aufweist sowie einen zweiten Abschnitt (53; 92) zum Anbringen an der Sitzstange des Zweiradrahmens, um das Schwenkgelenk (22, 27, 28; 82-85) für das vordere Ende des langgestreckten Elements unter der Kettenstange derart zu halten, daß bei Verwendung dessen Achse vor und unter dar Hinterradachse des Zweirads liegt, um zu vermeiden, daß der Anhänger dem Zweirad ein Moment verleiht, das in stehendem Zustand die Vorderseite des Zweirads anheben will, und um jedes Nickmoment zu minimieren, das die Vorderseite des Zweirads anheben will und von dem Rollwiderstand des Anhängers im fahrenden Zustand herrührt.

2. Deichsel nach Anspruch 1, **dadurch gekennzeichnet**, daß die Befestigungsvorrichtung zur Verbindung des einen Endes des langgestreckten Elements mit den Ketten- und Sitzstangen einen Träger (23), Mittel (25, 50, 86) zum Sichern des Trägers an der Kettenstange und Mittel (54, 20, 92) zum Sichern des Trägers an der Sitzstange aufweist, und daß die erste Schwenkverbindung zwischen dem einen Ende des langgestreckten Elements und dem Träger vorgesehen ist.

3. Deichsel nach Anspruch 2, **dadurch gekennzeichnet**, daß die erste Schwenkverbindung ein Paar horizontaler, mit Abstand angeordneter Stützen an dem Träger aufweist, wobei eine Nabe (22) an dem einen Ende des langgestreckten Elements eine Bohrung aufweist, die quer zu dem Element verläuft, und ein Schwenkstift (28) die Nabe zwischen den Stützen des Trägers sichert.

4. Deichsel nach Anspruch 2 oder Anspruch 3, **dadurch gekennzeichnet**, daß die Mittel zum Sichern des Trägers an den Sitz- und Kettenstangen des Zweiradrahmens ein Paar mit Abstand angeordneter Klemmelemente (25) aufweisen, die an dem Träger gesichert sind.

5. Deichsel nach einem der vorhergehenden Ansprüche, **dadurch gekennzeichnet**, daß die Befestigungsvorrichtung (35), die das andere Ende des langgestreckten Elements an dem Anhänger sichert, eine Nabe (36) mit Mitteln (42) zum Sichern der Nabe an einem Anhänger aufweist, in denen ein Endteil des langgestreckten Elements aufgenommen und zur Drehung um die Längsachse des Elements gesichert ist, um die dritte Schwenkverbindung zu bilden.

6. Deichsel nach einem der vorhergehenden Ansprüche, **dadurch gekennzeichnet**, daß die zweite Schwenkverbindung eine Gabel- und Zapfenverbindung (37, 38) nahe dem anderen Ende des langgestreckten Elements aufweist.

7. Deichsel nach Anspruch 6, **dadurch gekennzeichnet**, daß die Gabel/Zapfenverbindung eine an einem Teil des langgestreckten Elements gebildete Gabel und eine an dem anderen Teil des Elements gebildete Nabe aufweist, deren Achse, zur Anordnung zwischen den Armen der Gabel, quer zu dem Element verläuft, und einen Schwenkzapfen zum Sichern der Nabe zwischen den Armen der Gabel und zur Gelenkbildung um die Vertikalachse.

## Revendications

1. Barre d'attelage (20) pour une remorque pour cycle comportant un élément allongé (21) destiné à s'étendre entre un cycle et une remorque pour cycle, un dispositif de fixation (23) à une première extrémité de l'élément pour assujettir l'élément au cadre du cycle à proximité immédiate de l'axe de la roue arrière à l'aide d'un premier joint pivotant (22, 27, 28 ; 82-85) entre le dispositif de fixation et ladite première extrémité de l'élément pour permettre une rotation relative entre l'élément et le dispositif de fixation autour d'un axe horizontal s'étendant transversalement à l'élément, un second dispositif de fixation (35) à l'autre extrémité de l'élément pour fixer l'élément à la remorque pour cycle, un second joint pivotant (36, 37, 38) à l'autre extrémité ou à proximité immédiate de l'autre extrémité de l'élément pour une articulation autour d'un axe vertical afin qu'il s'étende à l'arrière du cycle lors de l'utilisation, et un troisième joint pivotant (41, 42) ayant un axe horizontal s'étendant longitudinalement à l'élément, grâce à quoi le cycle peut tourner par rapport à la remorque autour du deuxième joint pivotant, peut s'incliner par rapport à la remorque autour du troisième joint pivotant et peut basculer dans un plan vertical autour du premier joint pivotant , caractérisée en ce que le dispositif de fixation pour fixer ladite première extrémité de l'élément au cadre du cycle comporte une première partie (24, 64 ; 86) pour une fixation sur une longueur du tube de chaîne du cadre du cycle et une seconde partie (53 ; 92) pour une fixation sur le tube de selle du cadre du cycle afin de supporter ledit joint pivotant (22, 27, 28 ; 82-85) pour l'extrémité avant de l'élément allongé au-dessous du tube de chaîne pour que, lors de l'utilisation, son axe s'étende en avant et au-dessous de l'axe de la roue arrière du cycle afin d'éviter que la remorque impose au cycle un moment que tend à soulever l'avant du cycle dans l'état statique et minimisant tout moment de basculement tendant à soulever l'avant du cycle à la suite de la résistance de roulement de remorque dans l'état dynamique.

2. Barre d'attelage selon la revendication 1, caractérisée en ce que le dispositif de fixation pour relier ladite première extrémité de l'élément allongé aux tubes de chaîne et de selle comporte une console (23), des moyens (25, 50, 86) pour la fixation de la console au tube de chaîne et des moyens (54, 20, 92) pour la fixation de la console au tube de selle, et en ce que ladite première articulation pivotante est réalisée entre ladite première extrémité de l'élément allongé et la console.

3. Barre d'attelage selon la revendication 2, caractérisée en ce que la première articulation pivotante comporte deux pattes horizontales espacées (26, 27) sur la console, un moyeu (22) à ladite première extrémité de l'élément allongé, présentant un alésage s'étendant transversalement à l'élément, et une broche (28) de pivot fixant le moyeu entre las pattes de la console.

4. Barre d'attelage selon la revendication 2 ou la revendication 3, caractérisée en ce que les moyens pour fixer la console aux tubes de selle et de chaîne du cadre du cycle comprennent deux éléments espacés (25) de bridage fixés à la console.

5. Barre d'attelage selon l'une quelconque des revendications précédentes, caractérisée en ce que le dispositif de fixation (35) fixant l'autre extrémité de l'élément allongé à la remorque comporte un moyeu (36) ayant des moyens (42) pour fixer le moyeu à une remorque, dans lesquels une partie extrême de l'élément allongé est reçue et est fixée de façon à tourner autour de l'axe longitudinal de l'élément pour constituer ladite troisième articulation pivotante.

6. Barre d'attelage selon l'une quelconque des revendications précédentes, caractérisée en ce que la deuxième articulation pivotante comporte une articulation (37, 38) à chape et broche adjacente à ladite autre extrémité de l'élément allongé.

7. Barre d'attelage selon la revendication 6, caractérisée en ce que l'articulation à chape/broche comporte une chape formée sur une partie de l'élément allongé et un moyeu formé sur une autre partie de l'élément, ayant un axe s'étendant transversalement à l'élément pour se placer entre les branches de la chape, et une broche de pivotement pour fixer le moyeu entre les branches de la chape et pour réaliser une articulation autour dudit axe vertical.
